# EUROPÄISCHE PATENTSCHRIFT

(11) **EP 0 580 087 B1**
(45) Veröffentlichungstag und Bekanntmachung des Hinweises auf die Patenterteilung: **22.05.1996**
(21) Anmeldenummer: 93111428.4
(22) Anmeldetag: 16.07.1993
(51) Int. Cl.: D21B 1/32, D21F 1/70

(54) **Aufbereitungsverfahren für Altpapier**
Process for reusing waste paper
Procédé de récuperation des vieux papiers

(30) Priorität: 23.07.1992 DE 4224329
(43) Veröffentlichungstag der Anmeldung: 26.01.1994
(73) Patentinhaber: J.M. Voith GmbH, D-89522 Heidenheim (DE)
(72) Erfinder: Dörflinger, Hans-Dieter, D-89518 Heidenheim (DE); Veh, Gerhard, D-89420 Höchstädt (DE)
(74) Vertreter: Weitzel, Wolfgang, Dr.-Ing. Patentanwalt

(56) Entgegenhaltungen:
- EP-A- 0 558 908
- FR-A- 2 580 683
- DAS PAPIER Bd. 42, Nr. 7 , Juli 1988 , DARMSTADT, W.GERMANY Seiten 337 - 341 XP000003086 P. SCHWEISS 'Die Voith-Mehrfach-Injektorzelle'

## Beschreibung

Die Erfindung betrifft ein Aufbereitungsverfahren von Altpapier.

Aufbereitungsverfahren von Altpapier mit einer selektiven Flotation, welche mit möglichst wenig Faserverlust eine weitgehende Befreiung der Fasersuspension von der Druckfarbe bewirkt, sind beispielsweise in "Das Papier", Band 42, Nr. 7, Juli 1988, auf den Seiten 337 bis 341 offenbart. Bei diesem Verfahren wird der gesamte Primärüberlauf, d.h. der anfallende Flotationsschaum zu einer Sekundärstufe gegeben und dort gereinigt. Darüber hinaus besteht die Möglichkeit, den Schaum der Primärzellen zu verwerfen und den restlichen Primärüberlauf einer evtl. auch kleineren Sekundärstufe zuzuführen. Mit Rücksicht auf den Installationsaufwand kann die Sekundärstufe jedoch völlig entfallen. In diesem Fall wird entweder der gesamte Primärüberlauf verworfen oder auch nur der Überlauf der ersten Primärzelle. Der restliche Primärüberlauf wird dann in die Mischzelle zurückgeführt und den Primär-Flotationszellen wieder zugeführt. In diesem Fall ist jedoch bei richtiger Fraktion der Primärstufe die Druckfarbenkonzentration in den Überläufen der einzelnen Zellen sehr unterschiedlich. Von hohen Werten am Anfang der Flotation sinkt die Druckfarbenkonzentration schnell auf niedrige Werte ab. Der Gesamtprimärüberlauf ist deshalb eine Mischung mit mittlerer Konzentration. Ohne Sekundärstufe wird deshalb wegen dieser relativ niedrigen mittleren Druckfarbenkonzentration unnötig viel Stoff verworfen, um die vorgegebenen Druckfarbenmengen auszutragen. Um dies zu vermeiden, wird deshalb bei konventionellen Anlagen eine Sekundärstufe vorgesehen. Der Nachteil dessen besteht darin, daß bei Übergabe des gesamten Primärüberlaufes auf die Sekundärstufe, letztere relativ groß dimensioniert sein muß, um die gesamte von der Primärstufe kommende Druckfarbenmenge austragen zu können. Dazu sind, ähnlich wie in der Primärstufe, mehrere Flotationsstufen notwendig. Die Gesamtanlage zeichnet sich damit durch einen erheblichen konstruktiven Aufwand und einer umfangreichen Regelung bzw. Betriebsweise aus.

Die Aufgabe der Erfindunge ist es deshalb, die Nachteile der bekannten Lösungen zu vermeiden und eine einfach aufgebaute Anlage mit relativ geringem Abfallaufkommen vorzusehen. Diese wird erfindungsgemäß durch die Merkmale des Patentanspruchs 1 gelöst. Man hat durch Wegfall der Sekundär-Flotationsanlage auch den Vorteil einer leichteren Regelung bzw. Betriebsweise der Anlage.

In der nachveröffentlichten EP 0 558 908 A ist ein Aufbereitungsverfahren für Altpapier mit einer selektiven Flotation mit mindestens drei in Reihe geschalteten Flotationsstufen, bei welcher spätestens nach der zweiten Flotationsstufe der bis dahin angesammelte Flotationsschaum abgezogen und der Flotationsschaum der übrigen Flotationsstufen mittels eines Hydrozyklons getrennt bzw. gereinigt wird, bekannt. Der Schaum wird tangential dem Hydrozyklon zugeführt, welcher zwei Fraktionen erzeugt, wobei aus dem Kern leichte Partikel und Gas am oberen Ende und eine weniger Verschmutzungen enthaltende schwere Fraktion am unteren Ende abgezogen werden, und die untere Fraktion vor die selektive Flotationsanlage zurückgeführt wird und dieser zugeführt werden kann. Bei dieser Anlage wird auch auf eine selektive Sekundär-Flotationsanlage verzichtet. Der in den ersten beiden Flotationsstufen anfallende Flotationsschaum wird hier jedoch einer Totalflotationsanlage zugeführt, kann aber auch in einem zwei Fraktionen erzeugenden Hydrozyklon gereinigt werden.

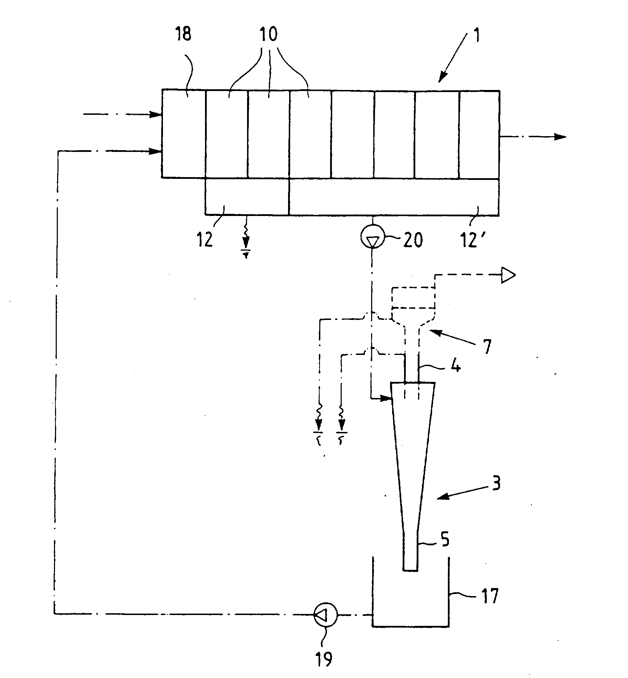

Nachfolgend wird die Erfindung anhand der Figur der Zeichnung erläutert, die ein Ausführungsbeispiel darstellt.

Die selektive Flotationsanlage 1 (Primärflotation) besteht aus einzelnen, in Reihe geschalteten Flotationszellen 10, von denen jeweils Schaum in eine Sammelrinne abgeführt wird, die hier in zwei Teile 12 und 12' unterteilt ist. Dabei wird der Schaum des ersten Teils 12 der Schaumrinne, vorzugsweise nur der ersten Stufe, verworfen. Der übrige Schaum, nämlich der des Schaumrinnenteils 12', wird von Pumpe 20 her einem Hydrozyklon 3 tangential zugeführt, der oben einen Abzug 4 mit Entgasungs-Kopfteil 7 für einen zu verwerfenden gashaltigen Kern und unten einen Abzug 5 für eine relativ weniger Schmutzpartikel enthaltende Schwerfraktion aufweist. Dabei enthält der gashaltige Kern auch noch einen gewissen Anteil an Fasern. Der Rest an Fasern geht durch das Abzugsrohr 5 mit einem Teil der Schmutzteilchen ab und wird vor die selektive Flotationsanlage 1 zurückgeführt. Vorzugsweise wird hier ein Hydrozyklon verwendet, der sich konisch in Richtung zum Abzug für die schwerere Fraktion verjüngt. Man spart auf diese Weise die Sekundärstufe der selektiven Flotationsanlage ein.

Man hat hier zwar auch eine höhere Belastung der ersten Flotationsstufen 10, jedoch ist hier damit nur ein höherer Abscheidegrad verbunden. Die späteren Stufen haben kaum eine höhere Belastung. Man kann aber auch die Stufenzahl um 1 oder 2 erhöhen. Es ergibt sich aber der große Vorteil einer einfacheren Betriebsweise und Regelung, weil die Sekundärstufe der selektiven Flotation, die sonst üblich ist, vermieden ist.

Leitung 5 des Hydrozyklons entleert vorzugsweise in einen Sammelbehälter 17, aus dem Pumpe 19 die Suspension zur Mischkammer 18 der selektiven Flotation fördert.

## Patentansprüche

1. Aufbereitungsverfahren für Altpapier mit einer mehrstufigen selektiven Flotation, wobei unter Wegfall einer selektiven Sekundär-Flotationsanlage spätestens nach der zweiten Flotationsstufe der bis dahin angesammelte Flotationsschaum abgezogen und verworfen wird, und der übrige Schaum mittels eines Hydrozyklons (3) getrennt bzw. gereinigt wird, indem der Schaum tangential dem Hydrozyklon (3) zugeführt wird, wobei zwei Fraktionen erzeugt werden, indem aus dem Kern leichte Partikel und Gas am oberen Ende abgezogen und verworfen sowie eine weniger Verschmutzungen enthaltende schwere Fraktion am unteren Ende abgezogen und vor die selektive Flotationsanlage (1) zurückgeführt wird.

## Claims

1. Repulping method for waste paper with a multi-stage selective flotation, with the omission of a selective secondary flotation plant, at the latest after the second flotation stage, the flotation froth which has accumulated up to then being removed and discarded, and the remaining froth being separated or cleaned by means of a hydro-cyclone (3), in that the foam is supplied tangentially to the hydro-cyclone (3), in which case two fractions are produced, in that from the core light particles and at the upper end gas is removed and discarded and a heavy fraction containing slight contamination is withdrawn at the lower end and fed back before the selective flotation plant (1).

## Revendications

1. Procédé de récupération de vieux papiers par flottation sélective à plusieurs étages qui, en supprimant une installation de flottation secondaire sélective, au plus tard après le second étage de flottation, extrait la mousse de flottation accumulée jusqu'alors et rejette cette mousse, le reste de la mousse étant séparé ou nettoyé à l'aide d'un cyclone hydraulique (3), en ce que la mousse arrive tangentiellement dans le cyclone hydraulique (3), et selon lequel on génère deux fractions en extrayant du coeur les particules légères et le gaz, par l'extrémité supérieure, et on rejette, alors que la fraction plus lourde contenant moins de saletés est extraite à l'extrémité inférieure pour être reconduite en amont de l'installation de flottation sélective (1).
